# EUROPEAN PATENT SPECIFICATION

(11) **EP 3 432 050 B1**
(45) Date of publication and mention of the grant of the patent: **27.12.2023**
(21) Application number: 17765678.2
(22) Date of filing: 20.02.2017
(51) Int. Cl.: G02B 27/01, B60K 35/00, G02B 5/30, G02B 1/11

(54) **DISPLAY IMAGING SYSTEM AND METHOD, AND VEHICLE CARRYING THE SYSTEM**
ANZEIGEABBILDUNGSSYSTEM UND -VERFAHREN SOWIE FAHRZEUG MIT DER SYSTEM
SYSTÈME ET PROCÉDÉ D'IMAGERIE D'AFFICHAGE, ET VÉHICULE PORTANT LE SYSTÈME

(30) Priority: 17.03.2016 CN 201610151142; 09.11.2016 CN 201610971143
(43) Date of publication of application: 23.01.2019
(73) Proprietor: Futurus Technology Co., Ltd., Beijing 100176 (CN)
(72) Inventor: XU, Junfeng, Beijing 100176 (CN)
(74) Representative: FDST Patentanwälte
(86) International application number: PCT/CN2017/074181
(87) International publication number: WO 2017/157136

(56) References cited:
- WO-A1-2015/186506
- CN-A- 103 018 796
- CN-A- 103 487 942
- CN-A- 105 093 534
- JP-A- H11 249 062
- US-A1- 2002 015 135
- US-A1- 2005 012 682
- US-A1- 2006 007 055

## Description

### Field of the Disclosure

Embodiments of the present invention relate to the field of optoelectronic technology, and more particularly, to a displaying system and also to a vehicle including the displaying system.

### Background of the Disclosure

A transparent displaying system typically consists of an image source and an imaging window. In existing transparent displaying systems, there are a variety of choices for the image source and the imaging window. An imaging window is usually composed of a substrate and a reflective surface, and most of the imaging windows adopt the structure in which the reflective surface serves as an interlayer in the substrate.

In the prior art, there are technical solutions utilizing a source emitting p-polarized light as the image source. For example, an imaging method using p-polarized light is mentioned in Chinese Patent Publications CN204143067U and CN104267498A, U.S. Patent Publications US6952312B2, US7123418B2 and US7355796B2, and European Patent Publication EP0836108A2.

However, these p-polarized light based imaging methods generally have the following drawbacks: if a relatively high reflectivity is required, then the transmissivity will be lowered, thereby reducing the viewing effect of the external environment, resulting in a relatively high demand on the brightness of the image source.

For example, when such methods are applied to a head-up display, a dark spot will be formed in the front window. If a relatively high transmissivity is required, the reflectivity will be lowered; in order to achieve a good imaging effect, there will be a relatively high demand on the brightness of the image source, which increases cost on power dissipation of the image source and the like.

In the prior art, a technique using a source that emits s-polarized light as the image source has been proposed. For example, U.S. Patent No. US2005012682, US2006007055 and Japanese Patent JP2-141720A mention an imaging method using s-polarized light. However, such s-polarized light based imaging methods have the following drawbacks:
1. a ghost image can be easily generated;
2. if a relatively high reflectivity is required, then the transmissivity will be reduced, thus reducing the viewing effect of the external environment.

Chinese patent CN2694293Y discloses a full color multiband stack film applied in a head-up display which utilizes the interference principle of the multi-layer film of the dielectric layer. The disadvantage of this technique is that the transmissivity of light of a specific wavelength is not high. For example, the low transmissivity for particular wavelengths such as red, green, blue light will greatly reduce the light (red, green, yellow light) emitted from traffic signal lamps, causing a big potential safety hazard. Moreover, the imaging angle of said technique is limited, and the imaging effect is not good; besides, the technique requires coating about 70 layers of films, so that the manufacturing process is too complicated.

A further head-up display utilizing a multilayer film for wavelength dependent reflection of light with a particular polarization direction is known from JP11-249062A.

### Summary of the Disclosure

In order to overcome the above shortcomings, a displaying system, a displaying method and a vehicle having said displaying system are provided in the technical solution of the present invention. The technical solution of the invention reduces the brightness demand on the image source, saves energy consumption, enables a ghost-free clear imaging, and permits good transmission of ambient light, which will not reduce the viewing effect of the external environment.

According to an aspect of the present invention, there is provided a displaying according to independent claim 1.

Preferably, an antireflection film is disposed on the second surface; the antireflection film increases the average transmissivity of the imaging window for visible light by 3% or more.

Preferably, the N spectral lines or bands comprise at least three spectral lines or bands, wherein a peak position of the first spectral line or band is in the range of 410 nm to 480 nm; a peak position of the second spectral line or band is in the range of 500 nm to 565 nm, and a peak position of the third spectral line or band is in the range of 590 nm to 690 nm.

Preferably, the first angle range is 50 degrees to 75 degrees.

Preferably, the second angle range is 55 degrees to 70 degrees.

Preferably, within the second angle range, the transflective film has an average transmissivity greater than 80% for the p-polarized light in the visible range.

Preferably, the transflective film has an average reflectivity greater than 70% for the N major bands within said first angle range; and the transflective film has an average reflectivity less than 50% for visible light band outside the N major bands.

Preferably, there is an angle between the plane of the image source and the imaging window, wherein the angle is in the range of 20 to 70 degrees.

Preferably, there is an angle between the plane of the image source and the imaging window, wherein the angle is in the range of 80 to 90 degrees.

Preferably, the image source is a displaying apparatus that emits a virtual image or a real image, or a virtual or real image formed by such displaying apparatus.

Preferably, the light source of the image source comprises a laser, a light emitting diode, an organic light emitting diode, an excited fluorescent light emitting material, a quantum dot excitation light source, or any combinations thereof.

According to another aspect of the present invention, there is provided a displaying system according to independent claim 10.

According to an aspect of the present invention, there is provided a head-up display comprising a displaying system as described above.

According to another aspect of the present invention, there is provided a vehicle comprising a displaying system as described above.

As can be seen from the above-described technical solutions, instead of using a source emitting p-polarized light as the image source, the embodiments of the present invention creatively use a source emitting s-polarized light including one or more spectral lines or bands as the image source, and meanwhile use a band-reflect feature imaging window corresponding to the image source for s-polarized light including spectral lines or bands, thus overcoming the drawbacks of the s-polarized light based imaging system, greatly facilitating the user's view of displayed image while viewing the external environment, and reducing the demand on the brightness of the image source.

Moreover, the present invention can obtain a relatively high reflectivity through the transflective film on the inner surface of the substrate, and can adequately suppress ghost image due to the existence of the antireflection film on the outer surface of the substrate.

In addition, the present invention can obtain the same optical information from p-polarized ambient light even if the s-polarized spectrum of the ambient light has partially filtered waveband. The present invention hardly affects the observer's perception of ambient light. Also, since the transflective film and the anti-reflection film are attached to the substrate by, for example, a coating technique, the present invention is relatively inexpensive.

### Brief Description of the Drawings

In order to more clearly illustrate the embodiments of the present invention or the technical solutions of the prior art, the drawings used for describing the embodiments or the prior art will be briefly described below. It will be apparent that the drawings described below merely describe part of the embodiments of the present invention. These drawings are not to be construed as limiting the invention, but are illustrative.
Figure 1 is an exemplary structural diagram of a displaying system according to one embodiment of the present invention;
Figure 2 is an exemplary schematic diagram showing the distribution of three spectral lines or bands according to one embodiment of the present invention;
Figure 3 is an exemplary structural diagram of an imaging window according to one embodiment of the present invention; and
Figure 4 is an exemplary flow chart of a displaying method.

### Detailed Description of the Embodiments of the Present Invention

In order to make the object, technical solution and advantages of the present invention clearer, the present invention will be described in further detail with reference to the accompanying drawings.

For purposes of brevity and intuition, the solution of the present invention will be described by describing a number of representative embodiments. Numerous details in the embodiments are provided solely to aid in understanding the aspects of the present invention. It will be apparent that the technical solution of the invention may be implemented without being limited to these details. In order to avoid unnecessarily obscuring aspects of the present invention, some embodiments are not described in detail, but only frames are presented. In the following text, "comprising" means "comprising, but is not limited to...", "according to ..." means "at least according to, but not limited to...", and "first", "second" and the like are used for reference to a feature only and are not intended to impose any limitation, e.g., a sequential limitation, on the feature.

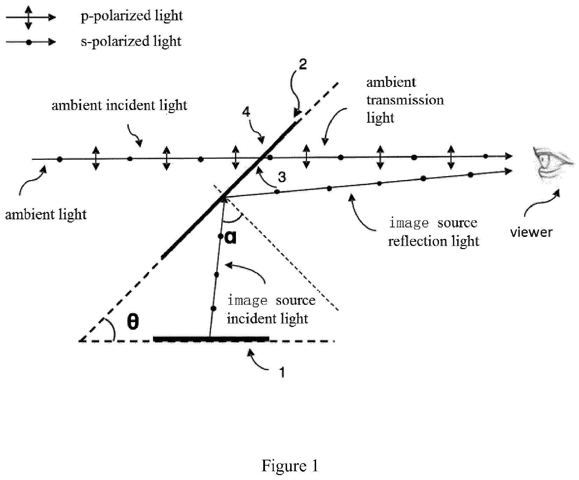

Figure 1 is an exemplary structural diagram of a displaying system according to one embodiment of the present invention.

As shown in FIG. 1, the system includes an image source 1 and an imaging window 2. The imaging window 2 comprises a transparent substrate and a transflective film 3 attached to one side of the substrate. The image source 1 emits s-polarized light. The s-polarized light has N spectral lines or bands in the visible light band, wherein N is a positive integer not less than 1, and the FWHM of the spectral lines or bands is 60 nm or less. The s-polarized light is incident on the imaging window 2 through the transflective film 3. The transflective film 3 has an average reflectivity greater than 50% for a waveband within the FWHM of at least one of the N spectral lines or bands of the s-polarized light emitted by the image source. The imaging window 2 also allows transmission of ambient light. In the embodiment shown in FIG. 1, the imaging window 2 further comprises an antireflection film 4 (it is to be understood, an antireflection film may not be used in other embodiments), which is attached to the other side of the substrate. The antireflection film 4 can increase the ambient light transmissivity of the imaging window 2.

The image source 1 may be a displaying apparatus, or a virtual image or a real image formed by such displaying apparatus.

For example, the displaying apparatus may be a liquid crystal screen, wherein the backlight light source of the liquid crystal screen may be a laser, a light emitting diode, an organic light emitting diode, an excited fluorescent light emitting material, a quantum dot excitation light source, or combinations thereof; the displaying apparatus may also be an active emitting lattice screen composed of a light-emitting point light source such as an LED, an OLED, a plasma light emitting point, or the like; the displaying apparatus may also be a projection imaging system based on such projection techniques such as DLP, LCOS and LCD, with the light source of LED, OLED, laser, or fluorescent light source or a combination thereof, reflected or transmitted through a display panel such as a DMD, an LCOS, and an LCD, and projected onto a projection screen via a projection lens for imaging; the displaying apparatus may also be a projection imaging system which images as the laser beams scan on a screen.

The real or virtual image formed by all the above-mentioned displaying apparatuses through a single or multiple times of refractions or reflections can also be used as an image source.

The substrate of the imaging window 2 may be made of a transparent material such as a PC resin, a PET resin, a PMMA resin, glass, quartz, or the like, and may also be subjected to a special treatment to have both transparent and color-changing properties. For example, in strong light conditions, the substrate may change color to reduce ambient light intensity.

The transflective film 3 may be arranged to cover the entire inner surface of the substrate, or may cover part of the inner surface of the substrate. The transflective film 3 is formed by stacking multiple film layers having different refractive indexes, wherein the composition of each film layer is selected from oxides, fluorides, nitrides, and the like, such as tantalum pentoxide, titanium oxide, magnesium oxide, zinc oxide, zirconium oxide, silicon dioxide, magnesium fluoride, silicon nitride, silicon oxynitride, aluminum fluoride, or combinations thereof.

The higher the average reflectivity of the transflective film 3 for the s-polarized light in the visible light range, the greater the intensity of the visible light reflected by the transflective film 3 to the observer. It has been found through test that the average reflectivity of the transflective film 3 for wavebands within FWHM of at least one of the N spectral lines or bands of the s-polarized light emitted by the image source is greater than a specific reflectivity, for example, greater than 50%, preferably greater than 60%, 70%, 80%, or 90%, and more preferably greater than 95%; the average reflectivity of the transflective film 3 for visible light band outside the FWHM of the N spectral lines or bands of the s-polarized light emitted by the image source is lower than the average reflectivity of the transflective film 3 for the waveband within FWHM of the N spectral lines or bands of the s-polarized light emitted by the image source which is greater than said specific reflectivity by at least 5%, preferably 10%, 15%, or even 20%. In addition, the transflective film 3 has an average transmissivity greater than 60%, preferably greater than 70%, 80%, or 90%, more preferably even more than 95% for p-polarized light in the visible light range.

Alternatively, in some embodiments, the average reflectivity of the transflective film 3 for a waveband within FWHM of the N spectral lines or bands of the s-polarized light emitted by the image source 1 is not greater than 50%, but in the range between 25% and 50%. In this case, an antireflection film 4 is used (the antireflection film 4 will be described in detail later).

In one embodiment, the s-polarized light incident on the transflective film 3 from the image source has three spectral lines or bands in the visible light band. The average reflectivity of the transflective film 3 for a waveband within the FWHM of the three spectral lines or bands is greater than 50%. The average reflectivity of the transflective film 3 for visible light band outside the FWHM of the three spectral lines or bands of the s-polarized light emitted from the image source 1 is lower than the average reflectivity (which is greater than 50%) of the transflective film 3 for the waveband within the FWHM of the three spectral lines or bands of the s-polarized light emitted from the image source by at least 5% or even 10%. In addition, the transflective film has an average transmissivity greater than 60% for p-polarized light in the visible light range.

In another embodiment not covered by claim 1 but possibly by claim 10, the s-polarized light incident on the transflective film 3 from the image source also has three spectral lines or bands in the visible light band. However, the transflective film 3 has an average reflectivity greater than 50% for the waveband within the FWHM of just one or two of the three spectral lines or bands. The transflective film 3 has an average reflectivity for the visible light band outside the FWHM of the three spectral lines or bands of the s-polarized light emitted from the image source 1 lower than the average reflectivity for the waveband within the FWHM of the three spectral lines or bands of the s-polarized light emitted from the image source by at least 5% or even 10%.

It is to be understood that in another embodiment, the number of spectral lines or bands of the s-polarized light incident on the transflective film 3 from the image source in the visible light band may be any positive integer not less than 1 (denoted by n). The transflective film 3 has an average reflectivity greater than 50% for a waveband within the FWHM of at least one of the N spectral lines or bands. The transflective film 3 has an average reflectivity for the visible light band outside the FWHM of the N spectral lines or bands of the s-polarized light emitted from the image source 1 lower than the average reflectivity (which is greater than 50%) for a waveband within the FWHM of the N spectral lines or bands of the s-polarized light emitted from the image source by at least 5% or even 10%.

Similar to the transflective film 3, the anti-reflection film 4 may cover the entire outer surface of the substrate, or may cover only a portion of the outer surface of the substrate. The anti-reflection film increases the average transmissivity of the imaging window for visible light by more than 3%.

As shown in FIG. 1, the incident angle of the s-polarized light to the transflective film 3 is α, where α ranges from 30 to 89 degrees. In order to achieve a better reflection and transmission effect, the value of α is preferably close to the angle tan⁻¹(n₂/n₁), where n₁ is the refractive index of the incident medium and n₂ is the refractive index of the substrate medium. For example, when n₁ = 1.0, n₂ = 1.52, then tan⁻¹(n₂/n₁) is about 56 degrees 40 minutes; when n₁=1.0, n₂=1.58, tan⁻¹ (n₂/n₁) is about 57 degrees 40 minutes; when n₁=1.0, n₂=1.49, tan⁻¹ (n₂/n₁) is about 56 degrees 08 minutes. The range of α is therefore preferably in the range of 50 to 75 degrees.

The range and preferred angles of α have been exemplified above and those skilled in the art will appreciate that depending on the refractive index of the substrate medium and the refractive index of the incident medium, the angle of α may also be in other ranges.

As further shown in FIG. 1, there is an angle θ between the image source 1 and the imaging window 2, wherein the angle θ is in the range of 20 to 70 degrees. Of course, the angle θ may also be a value in other ranges; for example, in some embodiments, the angle θ ranges from 80 degrees to 90 degrees.

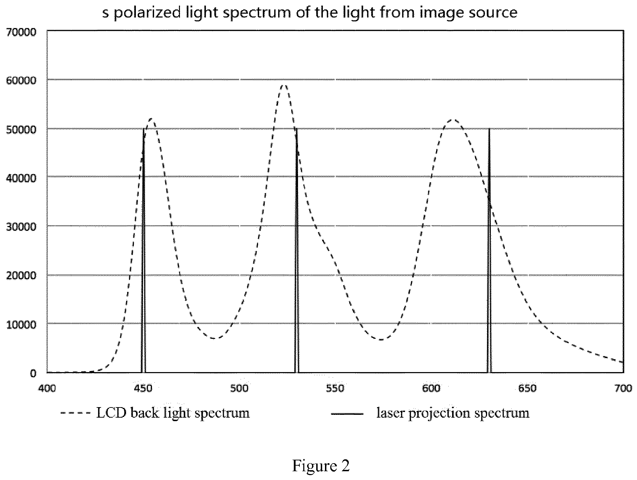

The spectrum of image source 1 can be comprised of one or several monochromatic spectral lines bands. For example, with reference to the exemplary schematic diagram of the source image spectrum shown in FIG. 2, in order to display color image, the s-polarized light emitted by the image source 1 may be superimposed by three spectral line or band distributions having the peak in the range of 590 nm to 690 nm (red), 500 nm to 565 nm (green), 410 nm to 480 nm (blue), respectively. The average reflectivity of the transflective film 3 for s-polarized wavebands within the FWHM of the three spectral lines or bands is greater than 60%. Preferably, the average transmissivity of the transflective film 3 for s-polarized light outside the FWHM of the three spectral lines or bands is greater than 60%.

In a preferred embodiment, the light source of the image source consists of a three-color laser with the peak positions of the three colors being 445 nm (blue), 532 nm (green), 635 nm (red), respectively. The FWHM of each peak is only about 1-2nm (see the laser projection spectrum indicated by the solid line in FIG. 2).

While particular wavelength bands of s-polarized light are described above using red, green and blue colors as examples, those skilled in the art will appreciate that the description is exemplary only and is not intended to limit the scope of the invention.

Referring again to FIG. 1, the s-polarized light emitted by the image source 1 is incident on the transflective film 3 of the imaging window 2. The transflective film 3 has an average reflectivity greater than, for example, 60% for wavebands within the FWHM of at least one of N spectral lines or bands of s-polarized light, whereby the image of the image source 1 is re-imaged through the imaging window 2. Further, the ambient light outside the imaging window 2 can penetrate through the imaging window at a relatively high transmissivity (for example, 70% or more), which can form a clear and natural image when incident on the observer's eyes. Thus, the observer can simultaneously view the displayed images of the image source 1 as well as the ambient light.

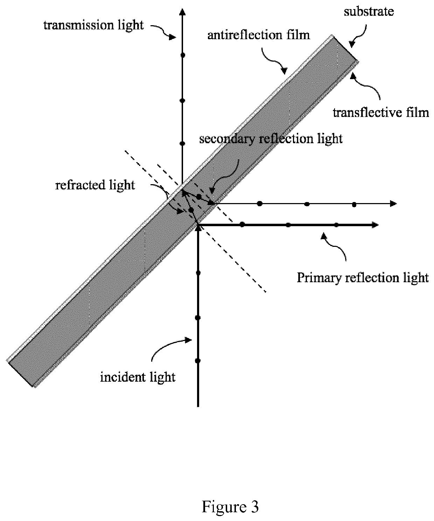

FIG. 3 is an exemplary structural diagram of an imaging window according to an embodiment of the present invention. Referring to FIG. 3, the imaging window 2 includes a substrate having an inner surface and an outer surface. A transflective film 3 is disposed on the inner surface of the substrate, and an antireflection film 4 is further provided on the outer surface.

In a preferred embodiment, the image source 1 may use s-polarized light having three colors of red, green and blue. For example, the three colors are in the three wavebands of 630 nm ± 10 nm (red), 540 nm ± 10 nm (green), 450 nm ± 10 nm (blue), respectively.

In one embodiment of the present invention, the transflective film coated on the inner surface of the substrate has the following optical characteristics:
(1) for p-polarized light, the transflective film has a transmissivity greater than 95% for all bands;
(2) for s-polarized light, the transflective film has an average reflectivity greater than 70% for one or more optical wavebands corresponding to the image source. For example, it has an average reflectivity greater than 70% for the three bands of 630 nm ± 10 nm (red), 540 nm ± 10 nm (green), and 450 nm ± 10 nm (blue), and has an average transmissivity greater than 70% for other wavebands.

The ghost image problem is first analyzed in the absence of an antireflection film. Assuming that the transflective film on the inner surface has an average reflectivity of 70% for a particular s-polarized light having one or more spectral lines or bands and has an average transmissivity greater than 70% for other bands; and the outer surface has a transmissivity of 90% for natural light. Then when the s-polarized light having said one or more optical bands is incident on the transflective film and reflected by the transflective film, the intensity of the primary reflection light of the s-polarized light is about 70% of the intensity of the incident light and the intensity of the s-polarized light refracted into the substrate is about 30% of the intensity of the incident light. The s-polarized light refracted into the substrate will be reflected a second time by the outer surface film, and the light intensity after the secondary reflection is 30% * (1-90%); the secondary reflection light is incident on the transflective film, and the intensity of the light refracted by the transflective film is 30%*(1-90%)*(1-70%) = 0.9%.

It can be seen that the intensity of the refracted light is almost negligible compared to the intensity of the primary reflection light. Therefore, no obvious ghost image will be formed in the present invention, thus overcoming the ghost image problem commonly encountered in the prior art using s-polarized light.

The antireflection film coated on the outer surface of the substrate enables the outer surface of the imaging window to achieve an average transmissivity greater than 95% for the entire natural light spectrum under normal daylight conditions.

Next, the ghost image problem is analyzed in conjunction with the transflective film and the anti-reflection film in the above-described embodiment. Assuming that the transflective film on the inner surface has an average reflectivity of 70% for a particular s-polarized light having one or more spectral lines or bands and has an average transmissivity greater than 70% for other bands; and the outer surface has a transmissivity of 95% for natural light due to the presence of the anti-reflection film. Then when the s-polarized light having said one or more optical bands is incident on the transflective film and reflected by the transflective film, the intensity of the primary reflection light of the s-polarized light is about 70% of the intensity of the incident light and the intensity of the s-polarized light refracted into the substrate is about 30% of the intensity of the incident light. The s-polarized light refracted into the substrate will be reflected a second time by the anti-reflection film, and the light intensity after the secondary reflection is 30% * (1-95%); the secondary reflection light is incident on the transflective film, and the intensity of the light refracted by the transflective film is 30%*(1-95%)*(1-70%) = 0.45%.

It can be seen that with the specific structure in which the inner surface of the substrate is provided with a transflective film and the outer surface thereof is provided with an anti-reflection film, the imaging window of the present invention further significantly reduces the ghost image problem.

Next, the combined transmissivity and reflectivity in said embodiment is analyzed in accordance with the optical characteristics of the above-mentioned transflective film:
(1) reflectivity: since the image source adopts s-polarized light, and since the reflection characteristic of the coating has high correspondence with the image source, it can be known from the reflection characteristics of the coating that the average reflectivity R > 70%;
(2) transmissivity: under general circumstances, assuming that the ambient natural light contains 50% p-polarized light and 50% s-polarized light; for p-polarized light, the average transmissivity is above 90%; for s-polarized light, and the average transmissivity thereof in the visible band (about 400 nm to 700 nm) is { (20+20+20)*0.3+[700-400-(20+20+20)]*0.7 } /(700-400)≈62%; thus the average transmissivity for the entire natural light T≈95%*50%+62%*50%= 78.5%.

In summary, due to the use of an image source having characteristics and a coating having a reflection characteristic corresponding to the source characteristics of the image source, the present invention can achieve a sum of the average transmissivity for visible light T and the average reflectivity R for a particular light source of the image source greater than 148.5% (T + R> 148.5%), thereby obtaining an imaging effect with both high transmissivity and high reflectivity.

In addition, the narrower the FWHM of the light source spectrum and the reflection characteristic spectrum of the reflective film is, the higher transmissivity can be obtained while ensuring the reflectivity.

In a more preferred embodiment, the light source for a set of image sources shown in FIG. 2 consists of a three-color laser with the peak positions of the three colors being 445 nm (blue), 532 nm (green), 635 nm (red), respectively. The FWHM of each peak is only about 1-2 nm (see the laser projection spectrum indicated by solid line in FIG. 2). With such a light source, a special corresponding transflective film is adopted for a particular angle range, for example, a range where the first angle is 55 degrees to 65 degrees. Said transflective film has a reflectivity of 95% for s-polarized light in the three spectral bands 444 nm to 446 nm, 531 nm to 533 nm, and 634 nm to 636 nm, has a transmissivity of 95% for s-polarized light outside the three bands, and has transmissivity of 95% for p-polarized light in the visible light range.

The combined transmissivity and reflectivity in said embodiment is analyzed as follows:
(1) reflectivity: since the image source adopts s-polarized light, and since the reflection characteristic of the coating has high correspondence with the image source, it can be known from the reflection characteristic of the coating that the average reflectivity R > 95%;
(2) transmissivity: under general circumstances, assuming that the ambient natural light contains 50% p-polarized light and 50% s-polarized light; for p-polarized light, the average transmissivity is above 90%; for s-polarized light, and the average transmissivity thereof in the visible band (about 400 nm to 700 nm) is {(2+2+2)*0.05+[700-400-(2+2+2)]*0.95} /(700-400)≈93.2%; thus the average transmissivity for the entire natural light T≈95%*50%+93.2%*50% =94.25%.

In summary, due to the use of an image source having polarization and spectra characteristics and a coating having a reflection characteristic corresponding to the characteristics of the image source, the present invention can achieve a sum of the average transmissivity for visible light T and the average reflectivity R for a particular light source of the image source greater than 189% (T + R> 189%), thereby obtaining an imaging effect with both high transmissivity and high reflectivity.

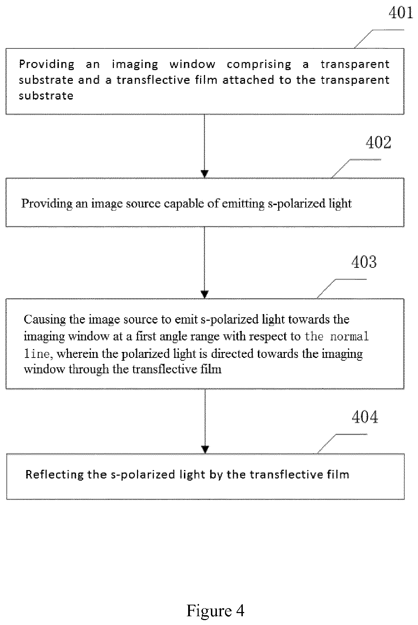

FIG. 4 is an exemplary flow chart of a displaying method. As shown, the method comprises:
step 401: providing an imaging window comprising a transparent substrate and a transflective film attached to the transparent substrate;
step 402: providing an image source capable of emitting s-polarized light;
step 403: causing the image source to emit s-polarized light to the imaging window in a first angle range with respect to the normal line, wherein the polarized light is directed toward the imaging window through the transflective film;
step 404: reflecting the s-polarized light by the transflective film;
wherein the s-polarized light has N spectral lines or bands in the visible light band, where N is a positive integer not less than 1, and preferably N is equal to or greater than 3; the FWHM of the spectral lines or bands is less than or equal to 60 nm; wherein within said first angle range, the transflective film has an average reflectivity greater than 50% for wavebands within the FWHM of at least one of the N spectral lines or bands of the s-polarized light emitted by the image source; the transflective film has an average reflectivity for visible light band outside the FWHM of the N spectral lines or bands of the s-polarized light emitted by the image source at least 5% and even 10% lower than the average reflectivity greater than 50% for wavebands within the FWHM of the N spectral lines or bands of the s-polarized light emitted by the image source; wherein the transflective film has an average transmissivity greater than 60% for p-polarized light in the visible range within the second angle range with respect to the normal line, wherein the first angle range is 30 to 89 degrees, preferably 50 degrees to 75 degrees; and the second angle range is 30 degrees to 80 degrees, preferably 55 degrees to 70 degrees.

In another embodiment, the s-polarized light has N spectral lines or bands in the visible light band, where N is a positive integer not less than 1, and preferably N is equal to or greater than 3; the FWHM of the spectral lines or bands is less than or equal to 60 nm; wherein within said first angle range, the transflective film has an average reflectivity in the range of 25% to 50% for wavebands within the FWHM of the 3 or more spectral lines or bands of the s-polarized light emitted by the image source, and has an average reflectivity for visible light band outside the FWHM of the N spectral lines or bands of the s-polarized light at least 5% lower than the average reflectivity for the former; and said transflective film has an average transmissivity greater than 60% for p-polarized light in the visible range within said second angle range with respect to the normal line.

The displaying system of the present invention can be applied in a variety of applications, e.g., to various head-up displays (HUDs) when used together with a base or pedestal; of course, they can also be used in vehicles such as automobiles or aircrafts.

According to the present invention, light from the image source and ambient light can be incident to the observer's eyes at the same time to form a clear image, thereby presenting the image of the image source to the observer's eyes without affecting the observer's observation of the external environment. In the embodiments of the present invention, s-polarized three-color lights are used as the image source of reflection, and meanwhile an imaging window with s-polarized narrow-band high-reflectivity film is used. Since the spectral bands of the image source and the transflective film are well matched, and since the s-polarized light is not affected by a Brewster's angle, the reflectivity of the light from the image source is greatly improved as compared with the conventional technique, the utilization efficiency of the reflection light is high, and thus the entire optical system can be realized with a lower power consumption. In addition, since a high reflectivity can be obtained on a transflective film on the inner surface of the substrate, and since an antireflection film is provided on the outer surface of the substrate, the ghost image problem can be well suppressed. Further, the observer's perception of the ambient light is almost not affected, since the same optical information can be obtained from the p-polarized ambient light, even if some band of the s-polarized spectrum of the ambient light is filtered.

The foregoing description of the disclosed embodiments will enable those skilled in the art to carry out or use the present invention. It is to be understood that the features disclosed in the above embodiments may be used alone or in combination, unless otherwise specified. Numerous modifications to these embodiments will be readily apparent to those skilled in the art, and the general principles defined herein may be implemented in other embodiments without departing from the scope of the invention as defined by the appended claims.

## Claims

1. A displaying system, comprising:
an imaging window (2) including a transparent substrate and a transflective film (3) attached to a first surface of the transparent substrate; and
an image source (1) that emits s-polarized light incident on the imaging window (2) through the transflective film (3),
**characterized by** that,
light emitted by the image source (1) before reaching the transflective film (3) only includes the s-polarized light, wherein the s-polarized light emitted by the image source (1) before reaching the transflective film (3) has N spectral lines or bands in the visible light band, wherein N is a positive integer not less than 1;
wherein the N spectral lines or bands each have a FWHM (full-width at half-maximum) equal to or less than 60 nm, and for each of the N spectral lines or bands in the visible spectra of the s-polarized light emitted from the image source (1), a major band is defined as the spectra band centered at the peak of the line or the band and expanding up to the FWHM so that the N spectral lines or bands include N maj or bands;
the transflective film (3) being capable of reflecting the s-polarized light emitted by the image source (1) at a first angle with respect to the normal line, and meanwhile capable of transmitting ambient light at a second angle with respect to the normal line, wherein the first angle has a first angle range from 30 to 89 degrees, and the second angle has a second angle range from 30 degrees to 80 degrees;
at said first angle, the transflective film (3) has a first average reflectivity for the s-polarized light emitted by the image source (1) in at least one major band of the N major bands, and has a second average reflectivity for the s-polarized light emitted by the image source (1) in visible bands outside the at least one major band, wherein the first average reflectivity is different from the second average reflectivity,
at said first angle, an average reflectivity of the transflective film (3) for the s-polarized light emitted by the image source (1) in each of the N major bands is greater than 50%; at said first angle, an average s-polarized reflectivity of the transflective film (3) for visible bands outside the N major bands is at least 5% lower than that for the at least one major band;
at the second angle, the transflective film (3) has an average transmissivity greater than 60% for p-polarized light in both of the at least one major band and the visible bands outside the at least one major band, wherein
the transflective film (3) is formed by stacking at least two types of film layers having different refractive indexes, the composition of the film layer being selected from one or more of tantalum pentoxide, titanium oxide, magnesium oxide, zinc oxide, zirconium oxide, silicon dioxide, magnesium fluoride, silicon nitride, silicon oxynitride, and aluminum fluoride.

2. The displaying system according to claim 1, wherein
the transflective film (3) reflects a first portion of the s-polarized light at the first angle with respect to the normal line as first light,
the transparent substrate further includes a second surface opposite to the first surface, the second surface reflects a second portion of the s-polarized light as second light and transmits a third portion of the s-polarized light as third light and wherein
the first light, the second light and the third light are all s-polarized light.

3. The displaying system according to claim 2, wherein an antireflection film (4) is disposed on the second surface of the transparent substrate so that the s-polarized light incident on the imaging window (2) subsequently through the transflective film (3), the transparent substrate and the antireflection film (4);
the antireflection film (4) reflects the second portion of the s-polarized light as the second light and transmits the third portion of the s-polarized light to the air as the third light;
the antireflection film (4) increases an average transmissivity of the display window (2) for visible light by 3% or more as compared with a situation where the antireflection film (4) is not disposed.

4. The displaying system according to claim 1, wherein the N spectral lines or bands comprise at least three spectral lines or bands, wherein a peak position of the first spectral line or band is in the range of 410 nm to 480 nm, a peak position of the second spectral line or band is in the range of 500 nm to 565 nm, and a peak position of the third spectral line or band is in the range of 590 nm to 690 nm.

5. The displaying system according to claim 1, wherein the first angle range is 50 degrees to 75 degrees and/or the second angle range is 55 degrees to 70 degrees.

6. The displaying system according to claim 1, wherein the transflective film (3), within the second angle range, has an average transmissivity greater than 80% for the p-polarized light in the visible range.

7. The displaying system according to claim 1, wherein the transflective film (3) has an average reflectivity greater than 70% for the N major bands within said first angle range; and the transflective film (3) has an average reflectivity less than 50% for visible light band outside the N major bands.

8. The displaying system according to any of claims 1-7, wherein the image source (1) is a displaying apparatus that emits a virtual image or a real image, or a virtual or real image formed by such displaying apparatus.

9. The displaying system according to any of claims 1-7, wherein a light source of the image source (1) comprises a laser, a light emitting diode, an organic light emitting diode, an excited fluorescent light emitting material, a quantum dot excitation light source, or any combinations thereof.

10. A displaying system, comprising:
an imaging window (2) including a transparent substrate having a first surface and a second surface, and a transflective film (3) attached to the first surface of the transparent substrate; and
an image source (1) for emitting s-polarized light incident on the imaging window (2) through the transflective film,
**characterized by** that,
light emitted by the image source (1) before reaching the transflective film (3) only including the s-polarized light, wherein the s-polarized light emitted by the image source (1) before reaching the transflective film (3) has N spectral lines or bands in the visible light band, wherein N is a positive integer not less than 1;
wherein the spectral lines or bands have a FWHM equal to or less than 60 nm, and for each of the N spectral lines or bands in the visible spectra of the s-polarized light emitted from the image source (1), a major band is defined as the spectra band centered at the peak of the line or the band and expanding up to the FWHM;
the transflective film (3) being capable of reflecting the s-polarized light emitted by the image source (1) at a first angle with respect to the normal line, and also capable of transmitting ambient light at a second angle with respect to the normal line, wherein the first angle has a first angle range from 30 to 89 degrees, and the second angle has a second angle range from 30 degrees to 80 degrees;
at said first angle, the transflective film (3) has an average reflectivity in the range of 25% to 50% for the N major bands; the transflective film (3) has an average reflectivity for visible light bands outside the N major bands at least 5% lower than the average reflectivity for the N major bands;
said transflective film (3) has an average transmissivity greater than 60% for p-polarized light in the visible range at said second angle; and
the displaying system further comprises an antireflection film (4) attached to the second surface of the transparent substrate, the antireflection film (3) increases the average transmissivity of the imaging window (2) for visible light by at least 3% as compared with a situation where the antireflection film (4) is not disposed, wherein
the s-polarized light incident on the imaging window (2) subsequently through the transflective film (3), the transparent substrate and the antireflection film (4) so that the transflective film (3) reflects a first portion of the s-polarized light at the first angle with respect to the normal line as first light, the antireflection film (4) reflects a second portion of the s-polarized light as second light and transmits a third portion of the s-polarized light to the air as third light, and the first light, the second light and the third light are all s-polarized light, and wherein
the transflective film (3) is formed by stacking at least two types of film layers having different refractive indexes, the composition of the film layer being selected from one or more of tantalum pentoxide, titanium oxide, magnesium oxide, zinc oxide, zirconium oxide, silicon dioxide, magnesium fluoride, silicon nitride, silicon oxynitride, and aluminum fluoride.

11. The displaying system according to claim 10, wherein the N spectral lines or bands comprise at least three spectral lines or bands, wherein a peak position of the first spectral line or band is in the range of 410 nm to 480 nm; a peak position of the second spectral line or band is in the range of 500 nm to 565 nm, and a peak position of the third spectral line or band is in the range of 590 nm to 690 nm.

12. The displaying system according to claim 10, wherein the first angle range is 50 degrees to 75 degrees, and/or the second angle range is 55 degrees to 70 degrees.

13. The displaying system according to claim 10, wherein the transflective film (3), within the second angle range, has an average transmissivity greater than 80% for the p-polarized light in the visible range.

14. The displaying system according to any of claims 10-13, wherein the image source (1) is a displaying apparatus that emits a virtual image or a real image, or a virtual or real image formed by such displaying apparatus.

15. The displaying system according to any of claims 10-13, wherein a light source of the image source (1) comprises a laser, a light emitting diode, an organic light emitting diode, an excited fluorescent light emitting material, a quantum dot excitation light source, or any combinations thereof.

16. A vehicle comprising a displaying system according to any of claims 1-15.

## Patentansprüche

1. Anzeigesystem, umfassend:
ein Abbildungsfenster (2), beinhaltend ein transparentes Substrat und einen transflektiven Film (3), angebracht an einer ersten Fläche des transparenten Substrats; und
eine Bildquelle (1), die s-polarisiertes Licht emittiert, das durch den transflektiven Film (3) auf das Abbildungsfenster (2) auftrifft,
**dadurch gekennzeichnet, dass**
Licht, das durch die Bildquelle (1) emittiert wurde, bevor es den transflektiven Film (3) erreicht, nur das s-polarisierte Licht aufweist, wobei das durch die Bildquelle (1) emittierte s-polarisierte Licht, bevor es den transflektiven Film (3) erreicht, N Spektrallinien oder -bänder in dem sichtbaren Band aufweist, wobei N eine positive ganze Zahl nicht kleiner als 1 ist;
wobei die N Spektrallinien oder -bänder jeweils eine volle Halbwertsbreite bzw. Full-Width-at-Half-Maximum, FWHM, kleiner oder gleich 60 nm aufweisen, und für jede bzw. jedes der N Spektrallinien oder -bänder in dem sichtbaren Spektrum des von der Bildquelle (1) emittierten s-polarisierten Lichts ein Hauptband definiert ist als das Spektralband, das an der Spitze der Linie oder des Bands zentriert ist und sich bis zu der FWHM erstreckt, so dass die N Spektrallinien oder -bänder N Hauptbänder beinhalten;
der transflektive Film (3) in der Lage ist zum Reflektieren des von der Bildquelle (1) emittierten s-polarisierten Lichts unter einem ersten Winkel relativ zu der Normalenlinie und auch in der Lage ist zum Transmittieren von Umgebungslicht unter einem zweiten Winkel relativ zu der Normalenlinie, wobei der erste Winkel einen ersten Winkelbereich von 30 bis 89 Grad aufweist und der zweite Winkel einen zweiten Winkelbereich von 30 bis 80 Grad aufweist;
wobei der transflektive Film (3) unter dem ersten Winkel eine erste durchschnittliche Reflektivität für das durch die Bildquelle (1) emittierte s-polarisierte Licht in mindestens einem Hauptband der N Hauptbänder aufweist und eine zweite durchschnittliche Reflektivität für das durch die Bildquelle (1) emittierte s-polarisierte Licht in sichtbaren Bändern außerhalb des mindestens einen Hauptbands aufweist, wobei sich die erste durchschnittliche Reflektivität von der zweiten durchschnittlichen Reflektivität unterscheidet,
wobei, unter dem ersten Winkel, eine durchschnittliche Reflektivität des transflektiven Films (3) für das durch die Bildquelle (1) emittierte s-polarisierte Licht in jedem der N Hauptbänder größer als 50 % ist; wobei unter dem ersten Winkel eine durchschnittliche s-Polarisation-Reflektivität des transflektiven Films (3) für sichtbare Bänder mindestens 5 % geringer als die für das mindestens eine Hauptband ist;
wobei der transflektive Film (3) unter dem zweiten Winkel eine durchschnittliche Transmissivität für p-polarisiertes Licht von größer als 60 % in sowohl dem mindestens einen Hauptband als auch in den sichtbaren Bändern außerhalb des mindestens einen Hauptbands aufweist, wobei
der transflektive Film (3) durch Stapeln von mindestens zwei Arten von Filmschichten, die unterschiedliche Brechungsindices aufweisen, gebildet wird, wobei die Zusammensetzung der Filmschicht ausgewählt wird aus einem oder mehreren von Tantalpentoxid, Titanoxid, Magnesiumoxid, Zinkoxid, Zirconiumoxid, Siliciumdioxid, Magnesiumfluorid, Siliciumnitrid, Siliciumoxinitrid und Aluminiumfluorid.

2. Anzeigesystem nach Anspruch 1, wobei
der transflektive Film (3) einen ersten Anteil des s-polarisierten Lichts unter dem ersten Winkel relativ zu der Normalenlinie als erstes Licht reflektiert,
das transparente Substrat ferner eine zweite Fläche, der ersten Fläche gegenüberliegend, aufweist, wobei die zweite Fläche einen zweiten Anteil des s-polarisierten Lichts als zweites Licht reflektiert und einen dritten Anteil des s-polarisierten Lichts als drittes Licht transmittiert und, wobei
das erste Licht, das zweite Licht und das dritte Licht allesamt s-polarisiertes Licht sind.

3. Anzeigesystem nach Anspruch 2, wobei ein Antireflexionsfilm (4) auf der zweiten Fläche des transparenten Substrats angeordnet ist, so dass das s-polarisierte Licht nacheinander durch den transflektiven Film (3), das transparente Substrat und den Antireflexionsfilm (4) auf das Abbildungsfenster (2);
wobei der Antireflexionsfilm (4) den zweiten Anteil des s-polarisierten Lichts als das zweite Licht reflektiert und den dritten Anteil des s-polarisierten Lichts als das dritte Licht in die Luft transmittiert;
wobei der Antireflexionsfilm (4) eine durchschnittliche Transmissivität des Anzeigefensters (2) für sichtbares Licht um 3 % oder mehr erhöht, im Vergleich mit einer Situation, in der der Antireflexionsfilm (4) nicht aufgebracht ist.

4. Anzeigesystem nach Anspruch 1, wobei die N Spektrallinien oder -bänder mindestens drei Spektrallinien oder -bänder umfassen, wobei eine Spitzenposition der ersten Spektrallinie oder des ersten Spektralbands im Bereich von 410 nm bis 480 nm liegt, eine Spitzenposition der zweiten Spektrallinie oder des zweiten Spektralbands im Bereich von 500 nm bis 565 nm liegt, und eine Spitzenposition der dritten Spektrallinie oder des dritten Spektralbands im Bereich von 590 nm bis 690 nm liegt.

5. Anzeigesystem nach Anspruch 1, wobei der erste Winkelbereich 50 Grad bis 75 Grad beträgt und/oder der zweite Winkelbereich 55 Grad bis 70 Grad beträgt.

6. Anzeigesystem nach Anspruch 1, wobei der transflektive Film (3), innerhalb des zweiten Winkelbereichs, eine durchschnittliche Transmissivität größer als 80 % für das p-polarisierte Licht im sichtbaren Bereich aufweist.

7. Anzeigesystem nach Anspruch 1, wobei der transflektive Film (3) eine durchschnittliche Reflektivität größer als 70 % für die N Hauptbänder innerhalb des ersten Winkelbereichs aufweist; und der transflektive Film (3) eine durchschnittliche Reflektivität kleiner als 50 % für sichtbares Licht außerhalb der N Hauptbänder aufweist.

8. Anzeigesystem nach einem der Ansprüche 1-7, wobei die Bildquelle (1) eine Anzeigevorrichtung ist, die ein virtuelles Bild oder ein reelles Bild, oder ein durch eine solche Anzeigevorrichtung gebildetes virtuelles oder reelles Bild emittiert.

9. Anzeigesystem nach einem der Ansprüche 1-7, wobei eine Lichtquelle der Bildquelle (1) einen Laser, eine Leuchtdiode, eine organische Leuchtdiode, ein angeregtes fluoreszierendes Leuchtmaterial, eine Quantenpunktanregungslichtquelle oder irgendeine Kombination davon umfasst.

10. Anzeigesystem, umfassend:
ein Abbildungsfenster (2), beinhaltend ein transparentes Substrat, das eine erste Fläche und eine zweite Fläche aufweist, und einen transflektiven Film (3), angebracht an der ersten Fläche des transparenten Substrats; und
eine Bildquelle (1) zum Emittieren von s-polarisiertem Licht, das durch den transflektiven Film auf das Abbildungsfenster (2) auftrifft,
**dadurch gekennzeichnet, dass**
Licht, das durch die Bildquelle (1) emittiert wurde, bevor es den transflektiven Film (3) erreicht, nur das s-polarisierte Licht aufweist, wobei das durch die Bildquelle (1) emittierte s-polarisierte Licht, bevor es den transflektiven Film (3) erreicht, N Spektrallinien oder -bänder in dem sichtbaren Band aufweist, wobei N eine positive ganze Zahl nicht kleiner als 1 ist;
wobei die Spektrallinien oder -bänder eine FWHM kleiner oder gleich 60 nm aufweisen, und für jede bzw. jedes der N Spektrallinien oder -bänder in dem sichtbaren Spektrum des von der Bildquelle (1) emittierten s-polarisierten Lichts ein Hauptband definiert ist als das Spektralband, das an der Spitze der Linie oder des Bands zentriert ist und sich bis zu der FWHM erstreckt;
der transflektive Film (3) in der Lage ist zum Reflektieren des von der Bildquelle (1) emittierten s-polarisierten Lichts unter einem ersten Winkel relativ zu der Normalenlinie und auch in der Lage ist zum Transmittieren von Umgebungslicht unter einem zweiten Winkel relativ zu der Normalenlinie, wobei der erste Winkel einen ersten Winkelbereich von 30 bis 89 Grad aufweist und der zweite Winkel einen zweiten Winkelbereich von 30 bis 80 Grad aufweist;
wobei unter dem ersten Winkel, der transflektive Film (3) eine durchschnittliche Reflektivität im Bereich von 25 % bis 50 % für die N Hauptbänder aufweist; der transflektive Film (3) eine durchschnittliche Reflektivität für sichtbares Licht außerhalb der N Hauptbänder von mindestens 5 % weniger als der durchschnittlichen Reflektivität für die N Hauptbänder aufweist;
der transflektive Film (3) eine durchschnittliche Transmissivität größer als 60 % für p-polarisiertes Licht in dem sichtbaren Bereich unter dem zweiten Winkel aufweist; und
wobei das Anzeigesystem ferner einen Antireflexionsfilm (4), angebracht an der zweiten Fläche des transparenten Substrats, umfasst, wobei der Antireflexionsfilm (3) die durchschnittliche Transmissivität des Abbildungsfensters (2) für sichtbares Licht um mindestens 3 % erhöht, im Vergleich mit einer Situation, in der der Antireflexionsfilm (4) nicht aufgebracht ist, wobei
das s-polarisierte Licht nacheinander durch den transflektiven Film (3), das transparente Substrat und den Antireflexionsfilm (4) auf das Abbildungsfenster (2), so dass der transflektive Film (3) einen ersten Anteil des s-polarisierten Lichts unter dem ersten Winkel relativ zu der Normalenlinie als erstes Licht reflektiert, wobei der Antireflexionsfilm (4) einen zweiten Anteil des s-polarisierten Lichts als zweites Licht reflektiert und einen dritten Anteil des s-polarisierten Lichts als drittes Licht in die Luft transmittiert, und wobei das erste Licht, das zweite Licht und das dritte Licht allesamt s-polarisiertes Licht sind, und wobei
der transflektive Film (3) durch Stapeln von mindestens zwei Arten von Filmschichten, die unterschiedliche Brechungsindices aufweisen, gebildet wird, wobei die Zusammensetzung der Filmschicht ausgewählt wird aus einem oder mehreren von Tantalpentoxid, Titanoxid, Magnesiumoxid, Zinkoxid, Zirconiumoxid, Siliciumdioxid, Magnesiumfluorid, Siliciumnitrid, Siliciumoxinitrid und Aluminiumfluorid.

11. Anzeigesystem nach Anspruch 10, wobei die N Spektrallinien oder -bänder mindestens drei Spektrallinien oder -bänder umfassen, wobei eine Spitzenposition der ersten Spektrallinie oder des ersten Spektralbands im Bereich von 410 nm bis 480 nm liegt; eine Spitzenposition der zweiten Spektrallinie oder des zweiten Spektralbands im Bereich von 500 nm bis 565 nm liegt, und eine Spitzenposition der dritten Spektrallinie oder des dritten Spektralbands im Bereich von 590 nm bis 690 nm liegt.

12. Anzeigesystem nach Anspruch 10, wobei der erste Winkelbereich 50 Grad bis 75 Grad beträgt und/oder der zweite Winkelbereich 55 Grad bis 70 Grad beträgt.

13. Anzeigesystem nach Anspruch 10, wobei der transflektive Film (3), innerhalb des zweiten Winkelbereichs, eine durchschnittliche Transmissivität größer als 80 % für das p-polarisierte Licht im sichtbaren Bereich aufweist.

14. Anzeigesystem nach einem der Ansprüche 10-13,
wobei die Bildquelle (1) eine Anzeigevorrichtung ist, die ein virtuelles Bild oder ein reelles Bild, oder ein durch eine solche Anzeigevorrichtung gebildetes virtuelles oder reelles Bild emittiert.

15. Anzeigesystem nach einem der Ansprüche 10-13, wobei eine Lichtquelle der Bildquelle (1) einen Laser, eine Leuchtdiode, eine organische Leuchtdiode, ein angeregtes fluoreszierendes Leuchtmaterial, eine Quantenpunktanregungslichtquelle oder irgendeine Kombination davon umfasst.

16. Fahrzeug, das ein Anzeigesystem nach einem der Ansprüche 1 bis 15 umfasst.

## Revendications

1. Système d'affichage, comprenant :
une fenêtre d'imagerie (2) comportant un substrat transparent et un film transflectif (3) attaché à une première surface du substrat transparent ; et
une source d'images (1) qui émet de la lumière polarisée s incidente sur la fenêtre d'imagerie (2) à travers le film transflectif (3),
**caractérisé en ce que**
la lumière émise par la source d'images (1), avant d'atteindre le film transflectif (3), comporte uniquement la lumière polarisée s, dans lequel la lumière polarisée s émise par la source d'images (1), avant d'atteindre le film transflectif (3), présente N lignes ou bandes spectrales dans la bande de la lumière visible, où N est un entier positif supérieur ou égal à 1 ;
dans lequel les N lignes ou bandes spectrales ont chacune une FWHM (largeur à mi-hauteur) égale ou inférieure à 60 nm, et pour chacune des N lignes ou bandes spectrales dans le spectre visible de la lumière polarisée s émise depuis la source d'images (1), une bande principale est définie comme la bande spectrale centrée sur le pic de la ligne ou la bande et s'étendant jusqu'à la FWHM de telle sorte que les N lignes ou bandes spectrales comportent N bandes principales ;
le film transflectif (3) pouvant réfléchir la lumière polarisée s émise par la source d'images (1) à un premier angle par rapport à la ligne normale, et pouvant en même temps transmettre la lumière ambiante à un deuxième angle par rapport à la ligne normale, le premier angle ayant une première plage d'angles de 30 à 89 degrés, et le deuxième angle ayant une deuxième plage d'angles de 30 degrés à 80 degrés ;
audit premier angle, le film transflectif (3) a une première réflectivité moyenne pour la lumière polarisée s émise par la source d'images (1) dans au moins une bande principale des N bandes principales, et a une deuxième réflectivité moyenne pour la lumière polarisée s émise par la source d'images (1) dans des bandes visibles à l'extérieur de l'au moins une bande principale, la première réflectivité moyenne étant différente de la deuxième réflectivité moyenne ;
audit premier angle, une réflectivité moyenne du film transflectif (3) pour la lumière polarisée s émise par la source d'images (1) dans chacune des N bandes principales est supérieure à 50 % ; audit premier angle, une réflectivité moyenne en polarisation s du film transflectif (3) pour les bandes visibles à l'extérieur des N bandes principales est inférieure d'au moins 5 % à celle pour l'au moins une bande principale ;
au deuxième angle, le film transflectif (3) a une transmissivité moyenne supérieure à 60 % pour la lumière polarisée s à la fois dans l'au moins une bande principale et dans les bandes visibles à l'extérieur de l'au moins une bande principale, dans lequel
le film transflectif (3) est formé par empilement d'au moins deux types de couches de film ayant différents indices de réfraction, la composition de la couche de film étant choisie à partir d'un ou plusieurs composés parmi le pentoxyde de tantale, l'oxyde de titane, l'oxyde de magnésium, l'oxyde de zinc, l'oxyde de zirconium, le dioxyde de silicium, le fluorure de magnésium, le nitrure de silicium, l'oxynitrure de silicium, et le fluorure d'aluminium.

2. Système d'affichage selon la revendication 1, dans lequel
le film transflectif (3) réfléchit une première partie de la lumière polarisée s au premier angle par rapport à la ligne normale sous la forme d'une première lumière,
le substrat transparent comporte en outre une deuxième surface à l'opposé de la première surface, la deuxième surface réfléchit une deuxième partie de la lumière polarisée s sous la forme d'une deuxième lumière et transmet une troisième partie de la lumière polarisée s sous la forme d'une troisième lumière, et dans lequel
la première lumière, la deuxième lumière et la troisième lumière sont toutes de la lumière polarisée s.

3. Système d'affichage selon la revendication 2, dans lequel un film antireflet (4) est disposé sur la deuxième surface du substrat transparent de telle sorte que la lumière polarisée s incidente sur la fenêtre d'imagerie (2) ensuite à travers le film transflectif (3), le substrat transparent et le film antireflet (4) ;
le film antireflet (4) réfléchit la deuxième partie de la lumière polarisée s sous la forme de la deuxième lumière et transmet la troisième partie de la lumière polarisée s à l'air sous la forme de la troisième lumière ;
le film antireflet (4) augmente une transmissivité moyenne de la fenêtre d'affichage (2) pour la lumière visible de 3 % ou plus par rapport à une situation où le film antireflet (4) n'est pas disposé.

4. Système d'affichage selon la revendication 1, dans lequel les N lignes ou bandes spectrales comprennent au moins trois lignes ou bandes spectrales, dans lequel une position de crête de la première ligne ou bande spectrale se situe dans la plage de 410 nm à 480 nm, une position de crête de la deuxième ligne ou bande spectrale se situe dans la plage de 500 nm à 565 nm, et une position de crête de la troisième ligne ou bande spectrale se situe dans la plage de 590 nm à 690 nm.

5. Système d'affichage selon la revendication 1, dans lequel la première plage d'angles va de 50 degrés à 75 degrés et/ou la deuxième plage d'angles va de 55 degrés à 70 degrés.

6. Système d'affichage selon la revendication 1, dans lequel le film transflectif (3), à l'intérieur de la deuxième plage d'angles, a une transmissivité moyenne supérieure à 80 % pour la lumière polarisée p dans le domaine visible.

7. Système d'affichage selon la revendication 1, dans lequel le film transflectif (3) a une réflectivité moyenne supérieure à 70 % pour les N bandes principales à l'intérieur de ladite première plage d'angles ; et le film transflectif (3) a une réflectivité moyenne inférieure à 50 % pour la bande de la lumière visible à l'extérieur des N bandes principales.

8. Système d'affichage selon l'une quelconque des revendications 1 à 7, dans lequel la source d'images (1) est un appareil d'affichage qui émet une image virtuelle ou une image réelle, ou une image virtuelle ou réelle formée par un tel appareil d'affichage.

9. Système d'affichage selon l'une quelconque des revendications 1 à 7, dans lequel une source de lumière de la source d'images (1) comprend un laser, une diode électroluminescente, une diode électroluminescente organique, un matériau émetteur de lumière fluorescente excité, une source de lumière à excitation de boîte quantique, ou toutes combinaisons de ceux-ci.

10. Système d'affichage, comprenant :
une fenêtre d'imagerie (2) comportant un substrat transparent ayant une première surface et une deuxième surface, et un film transflectif (3) attaché à la première surface du substrat transparent ; et
une source d'images (1) destinée à émettre de la lumière polarisée s incidente sur la fenêtre d'imagerie (2) à travers le film transflectif,
**caractérisé en ce que**
la lumière émise par la source d'images (1), avant d'atteindre le film transflectif (3), comporte uniquement la lumière polarisée s, dans lequel la lumière polarisée s émise par la source d'images (1), avant d'atteindre le film transflectif (3), présente N lignes ou bandes spectrales dans la bande de la lumière visible, où N est un entier positif supérieur ou égal à 1 ;
dans lequel les lignes ou bandes spectrales ont une FWHM égale ou inférieure à 60 nm, et pour chacune des N lignes ou bandes spectrales dans le spectre visible de la lumière polarisée s émise depuis la source d'images (1), une bande principale est définie comme la bande spectrale centrée sur le pic de la ligne ou la bande et s'étendant jusqu'à la FWHM ;
le film transflectif (3) pouvant réfléchir la lumière polarisée s émise par la source d'images (1) à un premier angle par rapport à la ligne normale, et pouvant également transmettre la lumière ambiante à un deuxième angle par rapport à la ligne normale, le premier angle ayant une première plage d'angles de 30 à 89 degrés, et le deuxième angle ayant une deuxième plage d'angles de 30 degrés à 80 degrés ;
audit premier angle, le film transflectif (3) a une réflectivité moyenne dans la plage de 25 % à 50 % pour les N bandes principales ; le film transflectif (3) a une réflectivité moyenne pour les bandes de la lumière visible à l'extérieur des N bandes principales inférieure d'au moins 5 % à la réflectivité moyenne pour les N bandes principales ;
ledit film transflectif (3) a une transmissivité moyenne supérieure à 60 % pour la lumière polarisée p dans le domaine visible audit deuxième angle ; et
le système d'affichage comprend en outre un film antireflet (4) attaché à la deuxième surface du substrat transparent, le film antireflet (3) augmente la transmissivité moyenne de la fenêtre d'imagerie (2) pour la lumière visible d'au moins 3 % par rapport à une situation où le film antireflet (4) n'est pas disposé, dans lequel
la lumière polarisée s incidente sur la fenêtre d'imagerie (2) ensuite à travers le film transflectif (3), le substrat transparent et le film antireflet (4) de telle sorte que le film transflectif (3) réfléchit une première partie de la lumière polarisée s au premier angle par rapport à la ligne normale sous la forme d'une première lumière, le film antireflet (4) réfléchit une deuxième partie de la lumière polarisée s sous la forme d'une deuxième lumière et transmet une troisième partie de la lumière polarisée s à l'air sous la forme d'une troisième lumière, et la première lumière, la deuxième lumière et la troisième lumière sont toutes de la lumière polarisée s, et dans lequel
le film transflectif (3) est formé par empilement d'au moins deux types de couches de film ayant différents indices de réfraction, la composition de la couche de film étant choisie à partir d'une ou plusieurs composés parmi le pentoxyde de tantale, l'oxyde de titane, l'oxyde de magnésium, l'oxyde de zinc, l'oxyde de zirconium, le dioxyde de silicium, le fluorure de magnésium, le nitrure de silicium, l'oxynitrure de silicium, et le fluorure d'aluminium.

11. Système d'affichage selon la revendication 10, dans lequel les N lignes ou bandes spectrales comprennent au moins trois lignes ou bandes spectrales, dans lequel une position de crête de la première ligne ou bande spectrale se situe dans la plage de 410 nm à 480 nm, une position de crête de la deuxième ligne ou bande spectrale se situe dans la plage de 500 nm à 565 nm, et une position de crête de la troisième ligne ou bande spectrale se situe dans la plage de 590 nm à 690 nm.

12. Système d'affichage selon la revendication 10, dans lequel la première plage d'angles va de 50 degrés à 75 degrés et/ou la deuxième plage d'angles va de 55 degrés à 70 degrés.

13. Système d'affichage selon la revendication 10, dans lequel le film transflectif (3), à l'intérieur de la deuxième plage d'angles, a une transmissivité moyenne supérieure à 80 % pour la lumière polarisée p dans le domaine visible.

14. Système d'affichage selon l'une quelconque des revendications 10 à 13, dans lequel la source d'images (1) est un appareil d'affichage qui émet une image virtuelle ou une image réelle, ou une image virtuelle ou réelle formée par un tel appareil d'affichage.

15. Système d'affichage selon l'une quelconque des revendications 10 à 13, dans lequel une source de lumière de la source d'images (1) comprend un laser, une diode électroluminescente, une diode électroluminescente organique, un matériau émetteur de lumière fluorescente excité, une source de lumière à excitation de boîte quantique, ou toute combinaison de ceux-ci.

16. Véhicule comprenant un système d'affichage selon l'une quelconque des revendications 1 à 15.
